# EUROPEAN PATENT SPECIFICATION

(11) **EP 3 902 737 B1**
(45) Date of publication and mention of the grant of the patent: **07.06.2023**
(21) Application number: 19842411.1
(22) Date of filing: 24.12.2019
(51) Int. Cl.: B62H 5/00, B62J 11/24, B62J 1/28, B62K 19/40

(54) **SADDLE-TYPE VEHICLE COMPRISING AN ANTI- THEFT DEVICE FOR A HELMET**
SATTELFAHRZEUG MIT EINER DIEBSTAHLSICHERUNG FÜR EINEN HELM
VÉHICULE À SELLE AVEC UN DISPOSITIF ANTIVOL POUR CASQUE

(30) Priority: 27.12.2018 IT 201800021172
(43) Date of publication of application: 03.11.2021
(73) Proprietor: Piaggio & C. S.P.A., 56025 Pontedera Pisa (IT)
(72) Inventor: SANTUCCI, Mario, 56025 Pontedera (Pisa) (IT); MARIOTTI, Valentino, 56025 Pontedera (Pisa) (IT)
(74) Representative: Carangelo, Pierluigi
(86) International application number: PCT/IB2019/061339
(87) International publication number: WO 2020/136581

(56) References cited:
- EP-A1- 2 213 558
- EP-A1- 2 327 614
- EP-A1- 2 719 610
- WO-A1-2014/170285
- DE-U1-202012 011 617
- JP-U- H02 143 287
- JP-Y2- 2 546 550
- US-A- 3 646 786

## Description

### TECHNOLOGICAL FIELD

The present description relates to the technical field of saddle-type vehicles and more particularly it relates to a saddle-type vehicle provided with an anti-theft device for a helmet.

### PRIOR ART

Saddle-type vehicles are known, such as for example mopeds, scooters, motorcycles, etc., which do not have a storage compartment inside which the helmet can be stored when the vehicle is not used. In these cases, the drawback is that when the vehicle is parked, to prevent the helmet from being left unattended and stolen, the driver is forced to carry his helmet with him, which is rather cumbersome and inconvenient to carry by hand. Other known saddle-type vehicles are provided with at least one storage compartment, which may consist for example of an under-saddle compartment or a top box fixed or integrated in the vehicle. The storage compartment is normally sized so as to allow a helmet to be stored therein and it is also typically provided with a lock with a key to prevent access to the storage compartment and protect the contents thereof. The aforesaid drawback can however also occur in vehicles provided with at least one storage compartment, for example in the case in which the storage compartment is occupied by objects which do not allow the housing of the helmet or in the case in which there is only one storage compartment in the vehicle and it is necessary to store a helmet for the driver and a second helmet for a passenger in the storage compartment.

The prior-art document US 3,646,786 A discloses the features of the preambles of claims 1 and 11.

A general object of the present description is to provide a saddle-type vehicle that is able to overcome or at least partially reduce the drawbacks discussed above with reference to the prior art.

### SUMMARY

This and other objects are achieved by a saddle-type vehicle as defined in the appended claim 1 in its most general form and in the dependent claims in some particular embodiments.

In particular, the aforementioned general object is achieved by providing a saddle-type vehicle comprising an anti-theft device for a helmet, the anti-theft device comprising:
- a housing, preferably integral with a part of the vehicle; and
- an anchoring mechanism adapted to be at least partially received within the housing.

The anchoring mechanism comprises:
- at least one anchoring member including a male anchoring portion configured to engage a female anchoring portion of the helmet; and
- a lock member associated to the at least one anchoring member.

The anchoring mechanism is adapted to assume:
an anchoring configuration, in which the male anchoring portion engages the female anchoring portion of the helmet to hold the helmet; and
a release configuration, in which the female anchoring portion is disengaged from the male anchoring portion to separate the helmet from the vehicle; wherein the male anchoring portion can selectively assume an anchoring position and a releasing position associated respectively to the anchoring configuration and the releasing configuration of the anchoring mechanism, wherein the movement of the male anchoring portion between said anchoring and releasing positions is controlled via the lock member, and wherein the at least one anchoring member is slidably coupled inside to said housing to slide along a sliding axis (the longitudinal axis of cavity, wherein the at least one anchoring member comprises a first and second portion opposite to each other and arranged so that at least one of them is configured to slide with respect to the other along said sliding axis to engage a first and/or a second female anchoring portion of a helmet.

By providing a saddle-type vehicle with an anti-theft device preferably integrated in the vehicle itself, where the anti-theft device allows the helmet to be anchored to the vehicle and is provided with a lock member, it is possible to secure the helmet to the vehicle avoiding that the helmet can be stolen even in a vehicle without a lockable storage compartment.

According to an embodiment, the male anchoring portion can selectively assume an anchoring position and a releasing position associated with the anchoring configuration and the releasing configuration of the anchoring mechanism, respectively. In particular, the movement of the male anchoring portion between said anchoring and releasing positions is controlled by the lock member.

According to an embodiment, the at least one anchoring member is slidably coupled inside said housing to slide along a sliding axis.

According to an embodiment, the at least one anchoring member comprises a first and a second portion, preferably a first and a second male anchoring portion opposite to each other and arranged so that at least one of them slides with respect to the other along said sliding axis to engage a first and/or a second female anchoring portion. According to an embodiment, the at least one anchoring member comprises a first and a second portion, preferably a first and a second male anchoring portion opposite to each other and arranged so that at least one of them slides with respect to the other along said sliding axis to engage respective a first and a second female anchoring portion.

According to an embodiment, the first and second male anchoring portion are pin shaped so as to pass through openings of the first and/or second female anchoring portion. According to an embodiment, the first and second male anchoring portion are pin shaped so as to pass through openings of the first and second female anchoring portion.

According to an embodiment, the at least one anchoring member is rotatable and comprises a single anchoring member. In particular, the female anchoring portion is complementary to said male anchoring portion. Moreover, the male anchoring portion is shaped so as to engage the female anchoring portion if a rotation in a specific angular position of the male anchoring portion occurs.

According to an embodiment, the housing comprises a housing hole adapted to house the anchoring mechanism. The anchoring mechanism can be completely extracted from the housing hole. The anchoring mechanism comprises locking elements and the housing comprises conjugated locking elements configured to engage the locking elements of the anchoring mechanism. In the anchoring configuration the locking elements and the conjugated locking elements are arranged so as to block the anchoring mechanism into the housing, preventing its extraction. In the release configuration, the locking elements and the conjugated locking elements are arranged so as to allow the extraction of the anchoring mechanism from the housing.

According to an embodiment, the locking elements of the anchoring mechanism comprise a first locking element controlled via the lock member and a second locking element associated to the anchoring member. The conjugated locking elements comprise a first conjugated locking element and a second conjugated locking element. In the anchoring configuration, the first locking element engages the first conjugated locking element to lock the sliding of the anchoring mechanism along a longitudinal axis of the housing hole and the second locking element engages the second conjugated locking element to prevent a rotation of the anchoring member about the longitudinal axis. In the release configuration, the first locking element is disengaged from the first conjugated locking element so to permit the sliding of the anchoring mechanism along the longitudinal axis.

According to an advantageous embodiment, since it allows implementing a particularly compact anti-theft device, the anchoring mechanism is further adapted to assume a transport configuration and a further release configuration. In the transport configuration and in the further release configuration the anchoring mechanism is almost entirely inserted into the housing. The conjugated locking elements comprise a further first conjugated locking element which is spaced from the first conjugated locking element along said longitudinal axis. In the transport configuration, the first locking element engages the further first conjugated locking element to lock the sliding of the anchoring mechanism along the longitudinal axis. In the further release configuration, the first locking element is disengaged from the further first conjugated locking element so to permit the sliding of the anchoring mechanism along the longitudinal axis.

According to an embodiment, the anchoring mechanism is configured to pass through an opening of the female anchoring portion. The male anchoring portion comprises a anchoring shoulder which is configured to abut against a corresponding abutment portion of the female anchoring portion when the anchoring mechanism assumes the anchoring configuration.

According to an advantageous embodiment, since it allows an easy insertion of the anchoring mechanism in the housing hole even when during the step of locking the helmet to the vehicle the housing hole is covered by the helmet, the second locking element and said second conjugated locking element are shaped so to guide the insertion of the anchoring mechanism inside the housing hole.

According to an embodiment, the housing and the anchoring mechanism are arranged on the vehicle, preferably under the saddle of the vehicle, more preferably on the handlebar of the vehicle. Advantageously, in the case in which the housing and the anchoring mechanism are arranged under the saddle, and more preferably in the vicinity of the saddle, the helmet can conveniently be secured to the anti-theft device by placing it on the saddle and in such a way that the saddle can be at least partially received inside the helmet. In this way, the helmet can at least partially protect the saddle from dirt and/or rain.

According to an embodiment, the lock member comprises a lock cylinder operable with a removable key.

According to an advantageous embodiment, the vehicle comprises a foldable cover which is adapted to cover the saddle and the helmet when the helmet is constrained to the anti-theft device. Thanks to the foldable cover it is conveniently possible to protect the helmet and saddle from dirt and/or rain in a particularly effective manner.

The object of the present invention is also a helmet as defined in claim 11.

In particular, the present invention relates to a helmet for a driver's head comprising a shell and at least one female anchoring portion provided on the shell which is shaped so to engage at least one male anchoring portion of the anchoring mechanism as defined in any one of the claims 1-10 of a vehicle.

According to an embodiment, the at least one female anchoring portion is arranged on a first and/or second side portions of the shell, preferably is arranged in a portion of the shell configured to protect a mandible cranium area of said head.

According to an embodiment, the at least one female anchoring portion is arranged at the rear of the shell.

Another object of the present invention is a kit as defined in claim 13.

### DESCRIPTION OF THE DRAWINGS

The invention will be better understood from the following detailed description of embodiments thereof, made by way of an example and therefore in no way limiting with reference to the accompanying drawings, in which:
- Fig. 1 shows a lateral view of a saddle-type vehicle and a helmet according to a first embodiment secured to the vehicle by an anti-theft device according to a first embodiment;
- Fig. 2 shows a lateral plan view in which the vehicle shown in Fig. 1 is partially shown with the helmet secured to the anti-theft device;

- Fig. 3 shows a partially sectional bottom plan view in which the saddle of the vehicle, the anti-theft device and the helmet of Fig. 1 are shown, in particular Fig. 3 shows an anchoring mechanism of the anti-theft device in a release configuration;
- Fig. 4 shows a partially sectional bottom plan view similar to Fig. 3 in which the anchoring mechanism is represented in an anchoring configuration;
- Fig. 5 shows a lateral plan view similar to Fig. 2 in which the saddle of the vehicle and the helmet are covered by a foldable cover;
- Fig. 6 shows a partial lateral view of a saddle-type vehicle similar to the vehicle of Fig. 1 and a helmet according to a second embodiment secured to the vehicle by an anti-theft device according to a second embodiment;
- Fig. 7 shows a partial back view of the vehicle of Fig. 6 in which the helmet of Fig. 6 secured to the anti-theft device of Fig. 6 is shown;
- Fig. 8 shows a view similar to Fig. 7 in which the helmet and the antitheft device are shown in partial section and in which in particular an anchoring mechanism of the anti-theft device is shown in a release configuration;
- Fig. 9 shows a view similar to Fig. 8 in which the anchoring mechanism is shown in an intermediate configuration;
- Fig. 10 shows a sectional plan view along the line A-A of Fig. 9 of a detail of Fig. 9;
- Fig. 11 shows a view similar to Fig. 9 in which the anchoring mechanism is shown in an anchoring configuration in which it engages the anchoring portion of the helmet so as to secure the helmet to the vehicle;
- Fig. 12 shows a sectional plan view along the line B-B of Fig. 11 of a detail of Fig. 11;
- Fig. 13 shows a partial axonometric front view of a saddle-type vehicle similar to the vehicle of Fig. 1 and a helmet according to a third embodiment secured to the vehicle by an anti-theft device according to a third embodiment;
- Fig. 14 shows an axonometric view of a detail of the helmet of Fig. 13;
- Fig. 15 shows an axonometric view of a detail of the anti-theft device of Fig. 13;
- Fig. 16 shows a front plan view of the detail of Fig. 15;
- Fig. 17 shows a lateral plan view of an anchoring mechanism of the anti-theft device of Fig. 13;
- Fig. 18 shows an axonometric exploded view of the anchoring mechanism of Fig. 17;
- Fig. 19 shows a partial sectional plan view of the helmet and of the anti-theft device of Fig. 13, where in particular the anchoring mechanism is shown in a release configuration;
- Fig. 20 shows a view similar to Fig. 9 in which the anchoring mechanism is shown in an anchoring configuration in which it secures the helmet to the vehicle;
- Fig. 21 shows a partial sectional plan view of the anti-theft device of Fig. 13, where in particular the anchoring mechanism is shown in a further release configuration;
- Fig. 22 shows a view similar to Fig. 21 in which the anchoring mechanism is shown in a transport configuration;
- Fig. 23 shows an axonometric view of a saddle-type vehicle similar to the vehicle of Fig. 1, wherein in particular an anti-theft device according to a fourth embodiment associated with the handlebar of the vehicle is shown.

### DETAILED DESCRIPTION

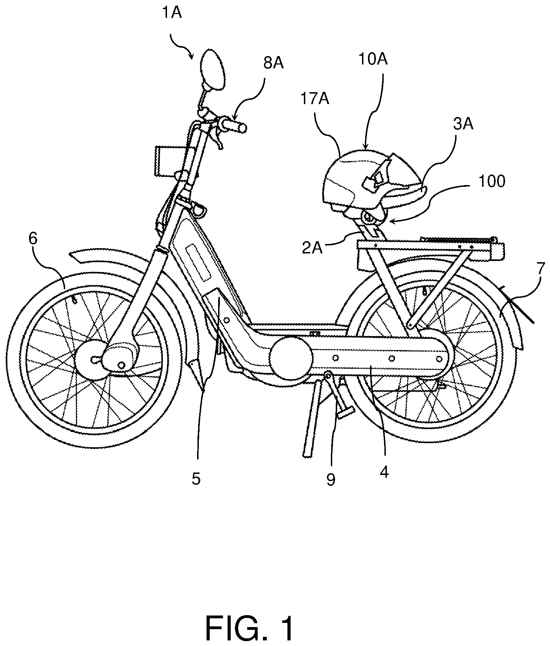

Referring initially to Fig. 1, in this figure a saddle-type vehicle has been globally indicated with the reference numeral 1A. According to a preferred embodiment, the vehicle 1A is in particular a scooter 1A. According to an embodiment, the vehicle 1A comprises a frame 5, at least one front wheel 6 and at least one rear wheel 7 which are operatively connected to the frame 5, a handlebar 8A operatively connected to the front wheel 6 and a saddle 3A for a driver of the vehicle 1A. According to a preferred embodiment, the saddle 3A has the same or similar shape as the saddle of a bicycle. Preferably, the vehicle 1A is a vehicle provided with a pair of pedals 9 arranged on opposite sides of the frame 5, which are operatively connected to the rear wheel 7 by means of a transmission 4. Preferably, the vehicle 1 is an electric traction vehicle. However, the teachings of the present description are not limited to a vehicle 1A of the type described above but can in general be applied to any vehicle of the type with a saddle of two, three, four or more wheels and with any type of a traction system that is intended to be used with a helmet, such as for example and not limited to motorcycles, mopeds, scooters, ATVs (All Terrain Vehicle), etc.

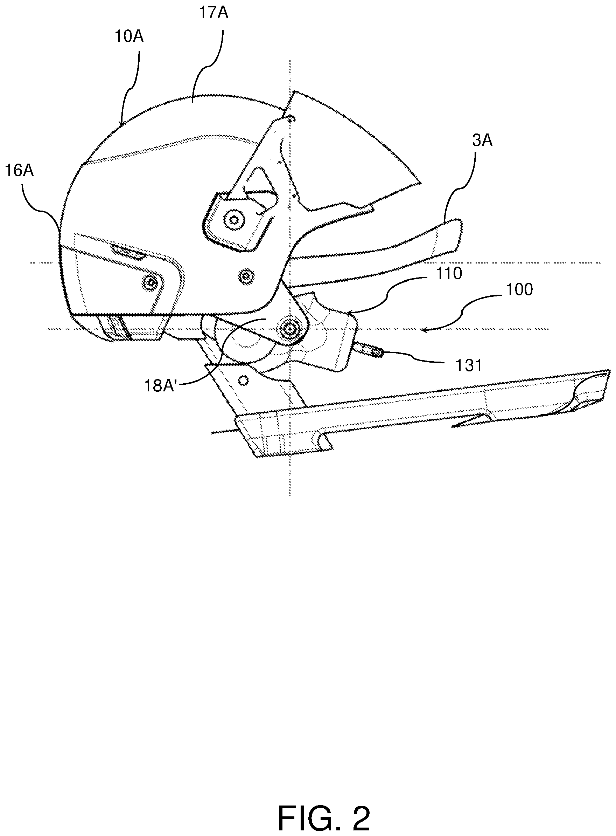

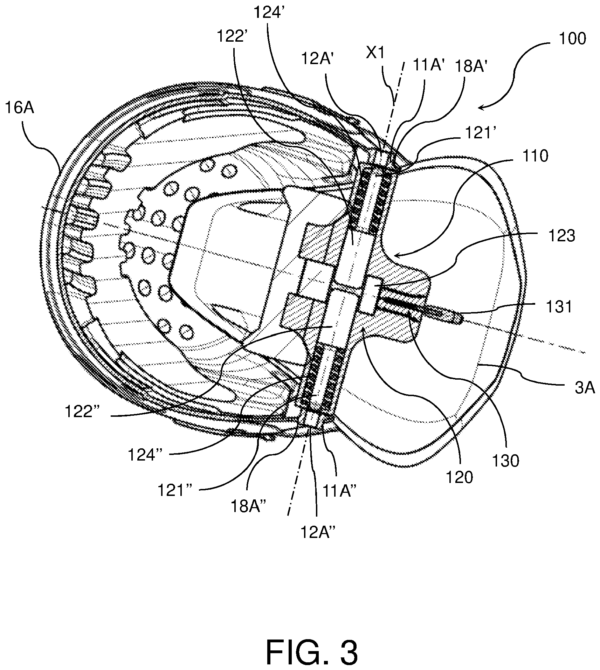

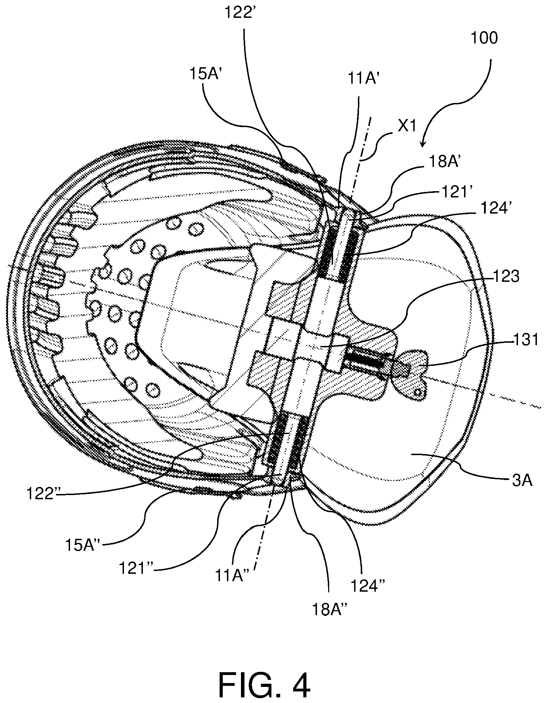

With reference to Figures 1-5, the vehicle 1A comprises an anti-theft device 100 for a helmet 10A according to a first embodiment. The helmet 10A comprises a shell 17A. Preferably, the helmet 10A is a helmet of the so-called "jet" type or of the so-called "demi-jet" type, i.e. a helmet without a chin-guard, or a helmet of the so-called "modular" type, that is to say, a helmet provided with a rotating chin guard. The anti-theft device 100 comprises a housing 110, which is preferably integral with a part 2A of the vehicle 1A and an anchoring mechanism 120 adapted to be at least partially received within the housing 110. The anchoring mechanism comprises at least one anchoring member 122', 122". According to an embodiment, the at least one anchoring member 122', 122" is slidably coupled inside the housing 110 to slide along a sliding axis X1. According to an embodiment, the at least one anchoring member 122',122" comprises a first and a second portion 121',121", preferably a first and a second male anchoring portion opposite to each other and arranged so that at least one of them slides with respect to the other along said sliding axis X1 to engage a first and/or a second female anchoring portion 11A', 11A". According to an embodiment, the first and the second portion 122', 122" are opposite to each other and arranged so that at least one of them slides with respect to the other along said sliding axis X1 to engage respectively the first and the second female anchoring portion 11A', 11A" of the helmet 10A. According to an embodiment, the male anchoring portions 122', 122" and the female anchoring portions 11A', 11A" are components suitable for interpenetrating each other and having a substantially complementary shape. According to an embodiment, the anchoring mechanism 120 comprises a pair of anchoring members 122', 122" each including a male anchoring portion 122', 122" configured to engage a respective female anchoring portion 11A', 11A" of the helmet 10A. Preferably, the female anchoring portions 11A', 11A" are provided on the shell 17A. More preferably, the female anchoring portions 11A', 11A" are arranged on a first and a second lateral portion 15A', 15A", respectively, of the shell 17A. Preferably, the female anchoring portions 11A', 11A" are arranged in a portion of the shell 17A configured to protect a mandibular cranium area of the head of a driver of the vehicle 1A. According to a preferred embodiment, the female anchoring portions 11A', 11A" are each arranged on a respective rigid protruding appendage 18A', 18A" of the shell 17A. The anchoring mechanism 120 comprises a lock member 130 associated with the at least one anchoring member 122', 122". Preferably, the lock member 130 comprises a lock cylinder 130 operable with a removable key 131. The anchoring mechanism 120 is adapted to assume an anchoring configuration (for example Fig. 2 and Fig. 4) and a release configuration (Fig. 3). In the anchoring configuration, the male anchoring portions 121', 121" engage the respective female anchoring portions 11A', 11A" of the helmet 10A to hold the helmet 10A. In the release configuration, the female anchoring portions 11A', 11A" are disengaged from the respective male anchoring portions 122', 122" to separate the helmet 10A from the vehicle 1A. According to an embodiment, at least one of the the male anchoring portions 122', 122" can selectively assume an anchoring position (Fig. 4) and a releasing position (Fig. 3) associated with the anchoring configuration and the releasing configuration of the anchoring mechanism 120, respectively. Preferably, both anchoring portions 121', 121" can assume the aforementioned anchoring and release positions. According to an embodiment, the movement of the at least one male anchoring portion 121', 121" between the aforementioned anchoring and release positions is controlled by the lock member 130. According to an embodiment, the anchoring portions 122', 122" are pin shaped so as to pass through openings 12A', 12A" of the first and/or second female anchoring portion 11A', 11A". According to an embodiment, the first and second male anchoring portion 122', 122" are pin shaped so as to pass through openings 12A', 12A" of the first and second female anchoring portion 11A', 11A". According to an embodiment, the anchoring mechanism 120 comprises a cam 123 operatively interposed between the lock member 130 and the pair of anchoring members 122', 122". Furthermore, the anchoring mechanism 120 comprises at least one return spring 124', 124" coupled to at least one of the anchoring members 122', 122" and arranged to make the anchoring mechanism 120 assume the release configuration starting from the anchoring configuration. According to an embodiment, the anchoring mechanism 120 comprises two anchoring members 122', 122" sliding along the axis X1 in opposite directions, each of which is coupled to a respective return spring 124', 124". In this case, starting from the release configuration, by operating the cam 123 through the lock member 130, for example by means of the key 131 inserted in the lock member 130, the cam 123 causes the outward sliding (with respect to the center of the housing 110) in opposite directions of the anchoring members 122', 122" in contrast with the action of the springs 124, 124" until the anchoring mechanism 120 assumes the anchoring configuration. In particular, in the anchoring configuration the cam 123 is arranged so as to releasably block the anchoring members 122', 122". Starting from the anchoring configuration, again through the lock member 130, and more preferably through the key 131 inserted in the lock member 130, it is possible to arrange the cam 123 in such a way that the return springs 124', 124" cause the anchoring members 122', 122" to slide inwards (with respect to the center of the housing 110) in opposite directions so as to make the anchoring mechanism assume the release configuration. According to an alternative embodiment (not shown), the anchoring mechanism 120 comprises two anchoring members 122', 122" of which only one is sliding while the other is fixed. In practice, in this case the anchoring mechanism 120 would be similar to the anchoring mechanism shown in Fig. 4 where, however, only one of the anchoring members 122', 122" would slide along axis X1 while the other would be fixed and arranged so as to be able to engage the respective anchoring portion 11A', 11A" provided in the helmet 10A. In such a case, a return spring coupled to the fixed anchoring member would clearly not be provided.

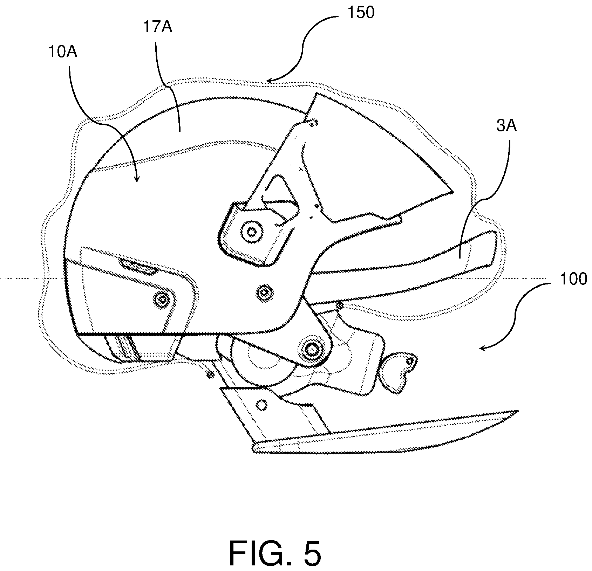

According to an embodiment, the housing 110 and the anchoring mechanism 120 are arranged on the vehicle 1A, preferably under the saddle 3A of the vehicle 1A and more preferably under the saddle 3A in the proximity of the saddle 3A. However, it should be noted that the anti-theft device 100 may be arranged in any part of the vehicle 1A that is suitable to allow the helmet 10 to be anchored. For example, the anti-theft device 100 could also be integral with the handlebar instead of a part 2A of the vehicle 1 located under the saddle 3A. With reference to Fig. 5, according to an embodiment, the vehicle 1A comprises a foldable cover 150 (shown in section in Fig. 5) which is suitable for covering the saddle 3A and the helmet 10A when the helmet 10A is connected to the anti-theft device 100. Preferably, the foldable cover 150 is a waterproof cover. Preferably, the cover 150 is housed under the saddle 3A when it is folded.

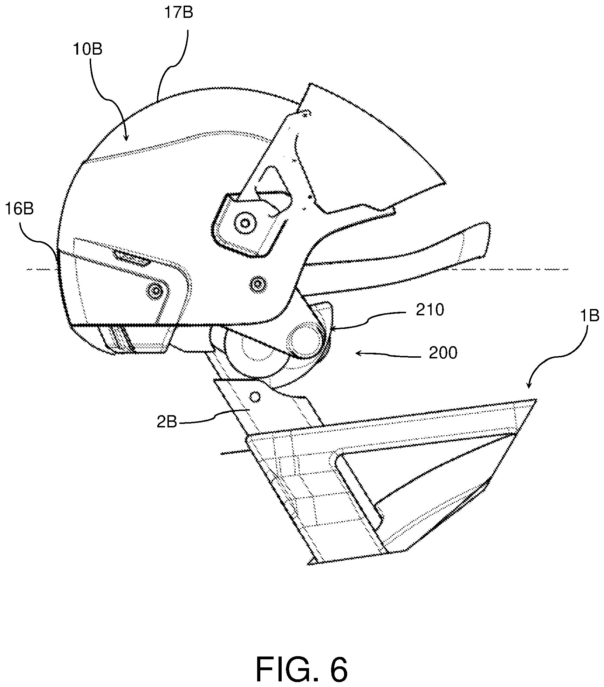

Referring now to Fig. 6, this figure partially shows a saddle-type vehicle which has been globally indicated with the reference numeral 1B. The vehicle 1B is identical to the vehicle 1A except for the fact that it comprises an anti-theft device 200 for a helmet 10B according to a second embodiment. Therefore, the vehicle 1B will not be described in greater detail and in relation to this vehicle the same considerations set out above with reference to vehicle 1A apply.

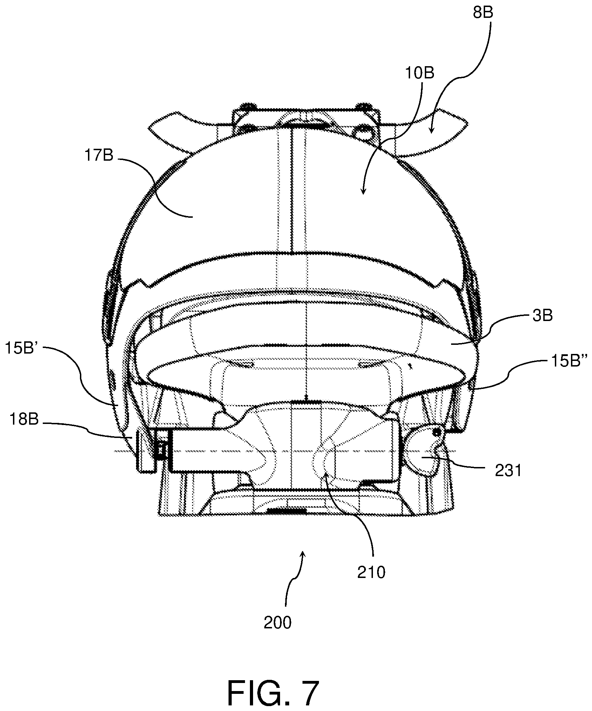

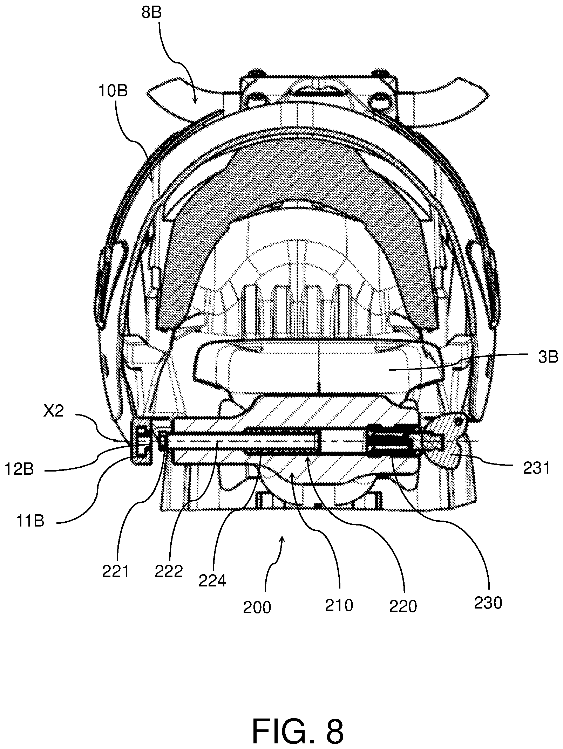

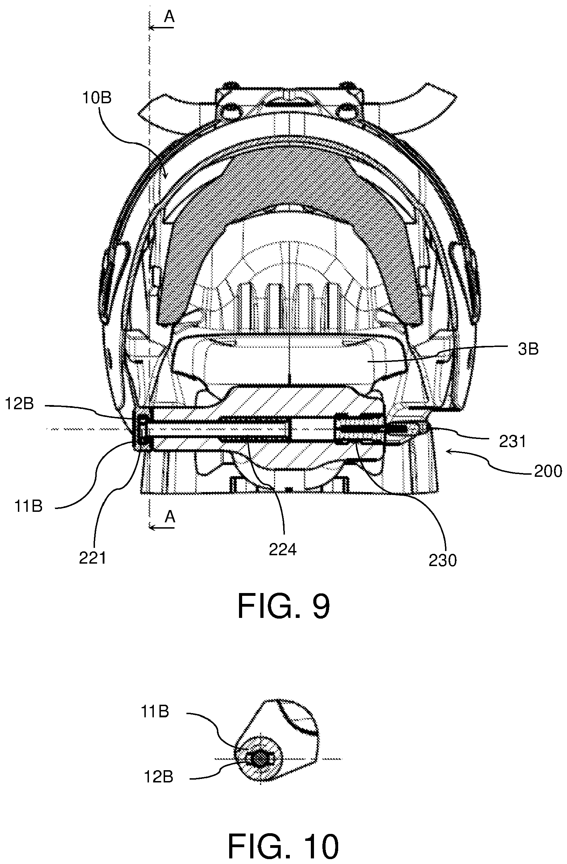

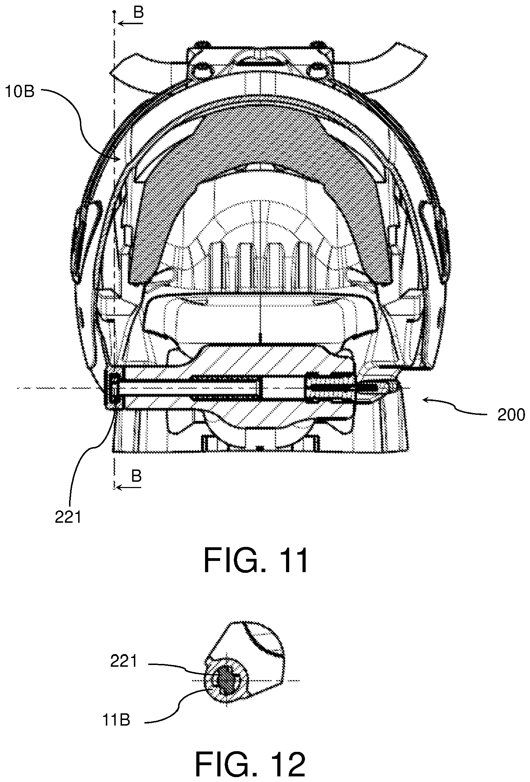

With reference to Figs. 6-12, the helmet 10B comprises a shell 17B. Preferably, the helmet 10B is a helmet of the so-called "jet" type or of the so-called "demi-jet" type, i.e. a helmet without a chin-guard, or a helmet of the so-called "modular" type, that is to say, a helmet provided with a rotating chin guard. The anti-theft device 200 comprises a housing 210, preferably integral with a part 2B of the vehicle 1B and an anchoring mechanism 220 adapted to be at least partially received within the housing 210. The anchoring mechanism 220 comprises a single anchoring member 222 including a male anchoring portion 221 configured to engage a respective female anchoring portion 11B of the helmet 10B. According to an embodiment, the male anchoring portion 221 and the female anchoring portion 11B are components suitable for interpenetrating each other and having a substantially complementary shape. Preferably, the female anchoring portion 11B is provided on the shell 17B. More preferably, the shell 17B comprises a first and a second lateral portion 15B', 15B" and the female anchoring portion 11B is arranged on one of these lateral portions 15B', 15B", for example on the portion 15B'. Preferably, the female anchoring portion 11B is arranged in a portion of the shell 17B configured to protect a mandibular cranium area of the head of the driver of the vehicle 1B. According to a preferred embodiment, the female anchoring portion 11B is arranged on a rigid protruding appendage 18B of the shell 17B. Again with reference to Figs. 6-12, the anchoring mechanism 220 comprises a lock member 230 associated with the anchoring member 222. Preferably, the lock member 230 comprises a lock cylinder 230 operable with a removable key 231. The anchoring mechanism 220 is adapted to assume an anchoring configuration (Fig. 11 and Fig. 12) and a release configuration (Fig. 8). In the anchoring configuration, the male anchoring portion 221 engages the female anchoring portion 11B of the helmet 10B to hold the helmet 10B. In the release configuration, the female anchoring portion 11B is disengaged from the male anchoring portion 221 to separate the helmet 10B from the vehicle 1B. According to an embodiment, the male anchoring portion 221 can selectively assume an anchoring position (Fig. 11 and Fig. 12) and a releasing position (Fig. 8) associated with the anchoring configuration and the releasing configuration of the anchoring mechanism 220, respectively. According to an embodiment, the movement of the male anchoring portion 221 between the aforementioned anchoring and release positions is controlled by the lock member 230. According to an embodiment, the anchoring member 222 is slidably coupled inside the housing 210 to slide along a sliding axis X2. According to an embodiment, the anchoring member 222 is rotatable and more particularly is rotatable about the axis X2. The female anchoring portion 11B is complementary to the male anchoring portion 221. In particular, the male anchoring portion 221 is shaped so as to engage the female anchoring portion 11B if a rotation in a specific angular position of the male anchoring portion 221 occurs. According to an embodiment, a return spring 224 is operatively interposed between the housing 210 and the anchoring member 222. According to an embodiment, to secure the helmet 10B to the vehicle 1B, starting from the release configuration (Fig. 8) of the anchoring mechanism 220, it is necessary to cause the sliding of the anchoring member 222 along the axis X2 by pushing the lock member 230 (in contrast with the action of the contrast spring 224, if provided) until the male anchoring portion 221 passes through an opening 12B of the female anchoring portion 11B. At this point the anchoring mechanism 220 is in an intermediate configuration shown in Figs. 9-10. Starting from this intermediate configuration of the anchoring mechanism 220, by rotating the anchoring member about the axis X2 by a predetermined angle, it is possible to arrange the male anchoring portion 221 so that it engages the complementary female anchoring portion 11B. In this way, the anchoring mechanism 220 assumes the anchoring configuration shown in Figs. 11-12 in which the helmet 10B is secured to the vehicle 1B. It should be noted that the rotation of the anchoring member 222 around the axis X2 is preferably carried out by operating the lock member 230, for example by means of the removable key 231. In order to release the helmet 10B from the vehicle 1B, starting from the anchoring configuration of the anchoring mechanism 220, it is necessary to rotate the anchoring member 222 about the axis X2 in the opposite direction to the previous one so as to disengage the male anchoring portion 221 from the complementary female anchoring portion 11B thus causing the aforesaid intermediate configuration of the anchoring mechanism 220. This can be done by operating the lock member 230, preferably by means of the removable key 231. Starting from the intermediate configuration of the anchoring mechanism 220, the anchoring member 222 can be made to slide along the axis X2 so that the anchoring mechanism can assume the release configuration. If the return spring 224 is provided, this sliding of the anchoring member 222 is determined by the return spring 224 itself.

According to an embodiment, the housing 210 and the anchoring mechanism 220 are arranged on the vehicle 1B, preferably under the saddle 3B of the vehicle 1B and more preferably under the saddle 3B in the proximity of the saddle 3B. However, it should be noted that the anti-theft device 200 may be arranged in any part of the vehicle 1B that is suitable to allow the helmet 10B to be anchored. For example, the anti-theft device 200 could also be integral with the handlebar 8B of the vehicle 1B instead of a part of the vehicle 1B located under the saddle 3B.

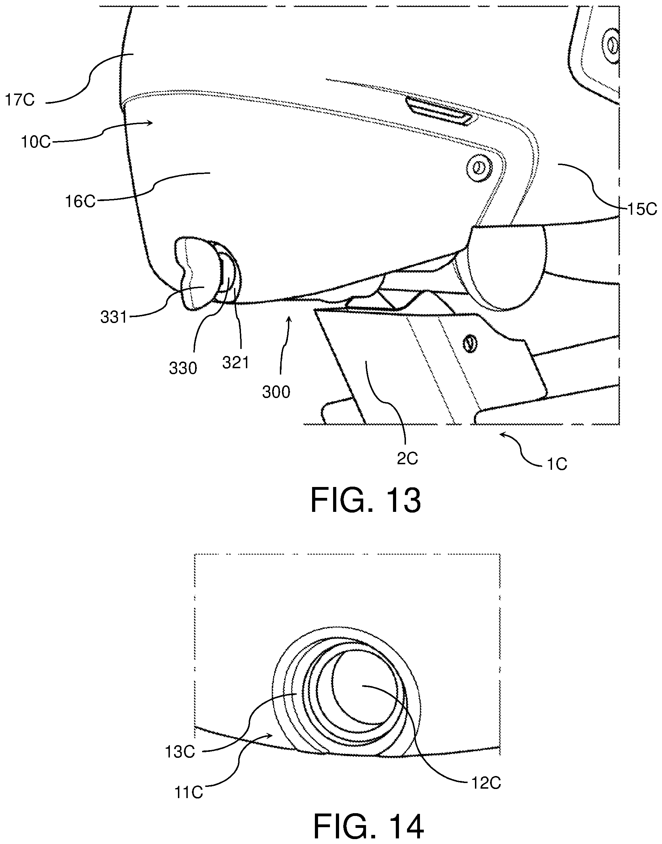

According to an embodiment, the vehicle 1B comprises a foldable cover identical to the foldable cover 150 (Fig. 5) which is preferably housed under the saddle 3B when it is folded. Referring now to Fig. 13, this figure partially shows a saddle-type vehicle which has been globally indicated with the reference numeral 1C. The vehicle 1C is identical to the vehicle 1A except for the fact that it comprises an anti-theft device 300 for a helmet 10C according to a third embodiment. Therefore, the vehicle 1C will not be described in greater detail and in relation to this vehicle the same considerations set out above with reference to vehicle 1A apply.

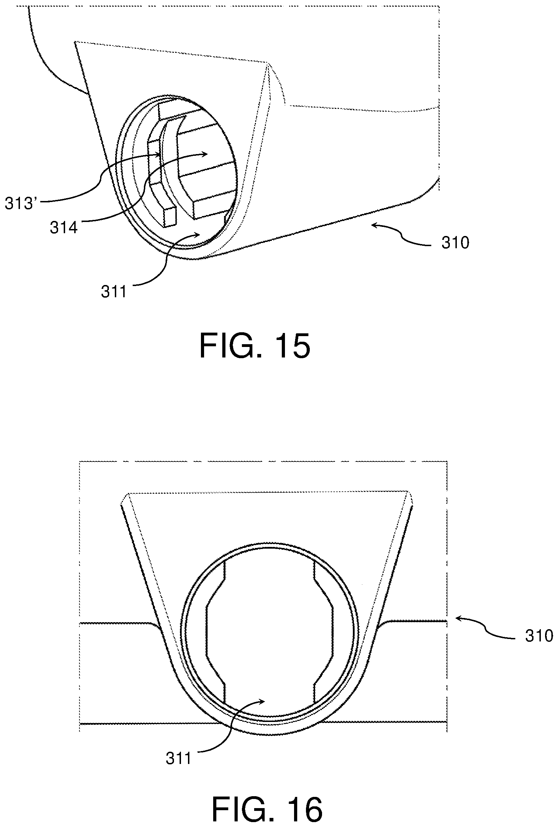

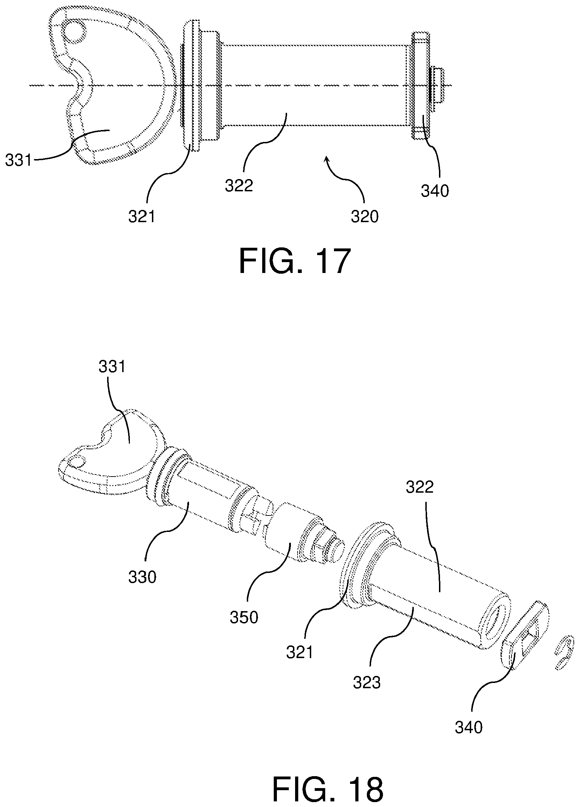

With reference to Figs. 13-22, the helmet 10C comprises a shell 17C. Preferably, the helmet 10B is a helmet of the so-called "jet" type or of the so-called "demi-jet" type, i.e. a helmet without a chin-guard, or a helmet of the so-called "modular" type, that is to say, a helmet provided with a rotating chin guard. The anti-theft device 300 comprises a housing 310, preferably integral with a part 2C of the vehicle 1C and an anchoring mechanism 320 adapted to be at least partially received within the housing 310. The anchoring mechanism 320 comprises an anchoring member 322 including a male anchoring portion 321 configured to engage a respective female anchoring portion 11C of the helmet 10C. According to an embodiment, the male anchoring portion 321 and the female anchoring portion 11C are components suitable for interpenetrating each other and having a substantially complementary shape. Preferably, the female anchoring portion 11C is provided on the shell 17C. More preferably, the female anchoring portion 11C is arranged on the back 16C of the shell 17C.

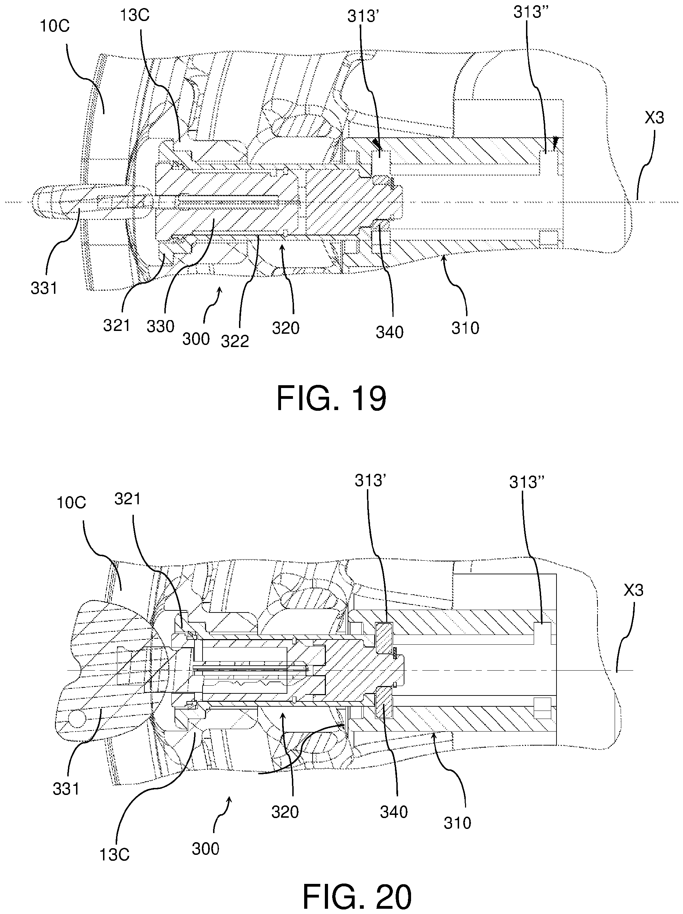

Again with reference to Figs. 13-22, the anchoring mechanism 320 comprises a lock member 330 associated with the anchoring member 322. Preferably, the lock member 330 comprises a lock cylinder 330 operable with a removable key 331. The anchoring mechanism 320 is adapted to assume an anchoring configuration (Fig. 20) and a release configuration (Fig. 19). In the anchoring configuration, the male anchoring portion 321 engages the female anchoring portion 11C of the helmet 10C to hold the helmet 10C. In the release configuration, the female anchoring portion 11C is disengaged from the male anchoring portion 321 to separate the helmet 10C from the vehicle 1C. According to an embodiment, the housing 310 comprises a housing hole 311 adapted to house the anchoring mechanism 320. In particular, the anchoring mechanism 320 can be completely extracted from the housing hole 311. In other words, the anchoring mechanism 320 can be completely separated from the housing 310. The anchoring mechanism 320 comprises locking elements 323, 340 and the housing 310 comprises conjugated locking elements 313', 313", 314 configured to engage the locking elements 323, 340 of the anchoring mechanism 320. In the anchoring configuration the locking elements 323, 340 and the conjugated locking elements 313', 313", 314 are arranged so as to block the anchoring mechanism 320 into the housing, preventing its extraction from the housing 310. In the release configuration, the locking elements 323, 340 and the conjugated locking elements 313', 313", 314 are arranged so as to allow the extraction of the anchoring mechanism 320 from the housing 310. According to an embodiment, the locking elements 323, 340 of the anchoring mechanism 320 comprise a first locking element 340 controlled via the lock member 330 and a second locking element 323 associated to the anchoring member 322. Preferably, the conjugated locking elements 313', 313", 314 comprise a first conjugated locking element 313' and a second conjugated locking element 314. In particular, in the anchoring configuration of the anchoring mechanism 320, the first locking element 340 engages the first conjugated locking element 313' to lock the sliding of the anchoring mechanism 320 along a longitudinal axis X3 of the housing hole 311 and the second locking element 323 engages the second conjugated locking element 314 to prevent a rotation of the anchoring member 322 about the longitudinal axis X3. Moreover, in the release configuration, the first locking element 340 is disengaged from the first conjugated locking element 313' so to permit the sliding of the anchoring mechanism 320 along the longitudinal axis X3. According to a preferred embodiment, the first locking element 340 comprises a locking plate 340 controlled in rotation by the lock member 330 and the first conjugated locking element 313' comprises a locking groove 313' suitable for receiving the locking plate 340. Preferably, the second locking element 323 comprises a pair of opposite locking walls 323 of the anchoring mechanism and the second conjugated locking element 314 comprises a pair of opposite conjugated locking walls 314 which are complementarily shaped with respect to the locking walls 323. Preferably, the walls 314 and 323 are flat walls. According to a preferred embodiment, the anchoring mechanism 320 comprises a transmission member 350 operatively interposed between the lock member 330 and the locking plate 340. The locking plate 340 is integral in rotation with the transmission member 350. According to an embodiment, the anchoring member 322 is a tubular member adapted to house at least the lock member 330 and more preferably both the lock member 330 and the transmission member 350. Preferably, the second locking element 323 is arranged on the anchoring member 322.

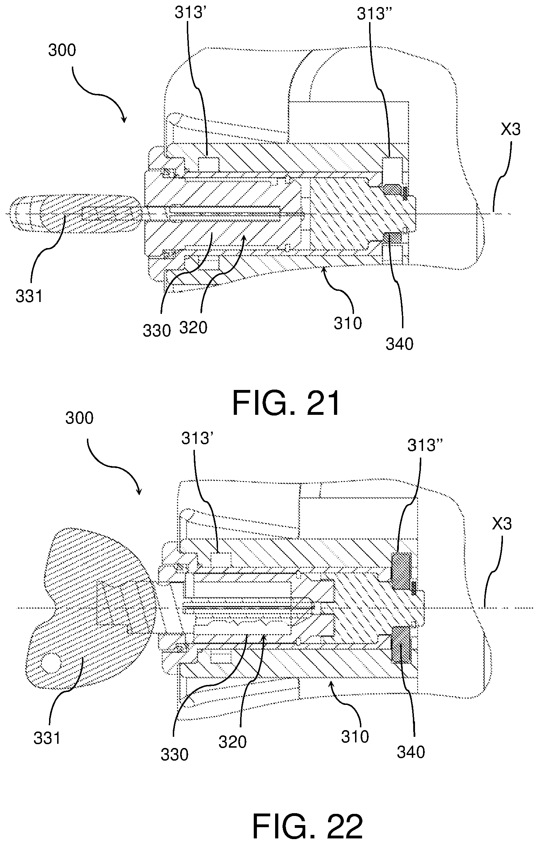

According to an embodiment, the anchoring mechanism 320 is further adapted to assume a transport configuration (Fig. 21) and a further release configuration (Fig. 20) in which the anchoring mechanism 320 is almost entirely inserted into the housing 310. In this case, the conjugated locking elements 313', 313", 314 comprise a further first conjugated locking element 313" which is spaced from the first conjugated locking element 313' along said longitudinal axis X3. In particular, in the transport configuration, the first locking element 340 engages the further first conjugated locking element 313" to lock the sliding of the anchoring mechanism 320 along the longitudinal axis X3. In the further release configuration, the first locking element 340 is instead disengaged from the further first conjugated locking element 313' so to permit the sliding of the anchoring mechanism 320 along the longitudinal axis X3. According to an embodiment, the further conjugated locking element 313" comprises a further locking groove 313' suitable for receiving the locking plate 340. According to an advantageous embodiment, the second locking element 323 and the second conjugated locking element 314 are shaped so to guide the insertion of the anchoring mechanism 320 inside the housing hole 311.

According to an embodiment, the anchoring mechanism 320 is configured to pass through an opening 12C of the female anchoring portion 11C. In particular, the male anchoring portion 321 comprises a anchoring shoulder 321 which is configured to abut against a corresponding abutment portion 13C of the female anchoring portion 11C when the anchoring mechanism 320 assumes the anchoring configuration.

According to an embodiment, to secure the helmet 10C to the vehicle 1C it is necessary to insert the anchoring mechanism 320 through the opening 12C and subsequently insert the anchoring mechanism 320 inside the housing hole 311 until the anchoring mechanism 320 assumes the release configuration shown in Fig. 19. In particular, in this release configuration the shoulder 321 is in abutment with a corresponding abutment portion 13C but the locking plate 340 is disengaged from the locking groove 313', still allowing the helmet 10C to be released. From this last configuration, in order to secure the helmet 10C to the vehicle 1C, it is therefore necessary to rotate the locking plate 340 around the axis X3 by actuating the lock member 330 so that the locking plate 340 engages the locking groove 313'. In this way, the anchoring mechanism 320 assumes the anchoring configuration shown in Fig. 20, in which the shoulder 321 holds the helmet 10C. Preferably, the rotation of the locking plate 340 is effected by means of the removable key 331 inserted in the lock member 330. It should be noted that during the rotation of the locking plate 340 the anchoring member 322 is locked in rotation about the axis X3. In order to release the helmet 10C starting from the anchoring configuration of the mechanism 320 it is necessary to rotate the locking plate 340 in a direction opposite to the previous one through the lock member 330, and more preferably through the key 331 inserted in the lock member 330, so as to disengage the locking plate 340 from the locking groove 313'. In this way, the anchoring mechanism 320 assumes the release configuration.

With reference to Fig. 21 and Fig. 22, the figures show the transport configuration (Fig. 22) and the further release configuration (Fig. 1) of the anchoring mechanism 320. In the transport configuration the anchoring mechanism 320 is anchored to the housing 310 and the male anchoring portion 321 directly engages a portion of the housing 310. In other words, in the transport configuration the anchoring mechanism 320 does not secure the helmet 10C to the vehicle 1C and this mechanism 320 is only constrained to the housing 310. In the further release configuration, the anchoring mechanism 320 can be extracted from the housing 310. According to an embodiment, in order to bring the anchoring mechanism 320 from the further release configuration to the transport configuration, the locking plate 340 must be rotated so that the latter engages the further locking groove 313". Vice versa, in order to bring the anchoring mechanism 320 from the transport configuration to the further release configuration it is necessary to rotate the locking plate 340 so that the latter is disengaged from the further locking groove 313". The rotation of the locking plate 340 around the axis X3 to pass from the transport configuration to the further release configuration and vice versa can be performed through the lock member 330 and more preferably through the removable key 331 inserted in the lock member 330.

According to an embodiment, the housing 310 and the anchoring mechanism 320 are arranged on the vehicle 1C, preferably under the saddle 3C of the vehicle 1C and more preferably under the saddle 3C in the proximity of the saddle 3C. However, it should be noted that the anti-theft device 300 may be arranged in any part of the vehicle 1C that is suitable to allow the helmet 10C to be anchored. For example, the anti-theft device 300 could also be integral with the handlebar (not shown) of the vehicle 1C instead of a part of the vehicle 1C located under the saddle 3C.

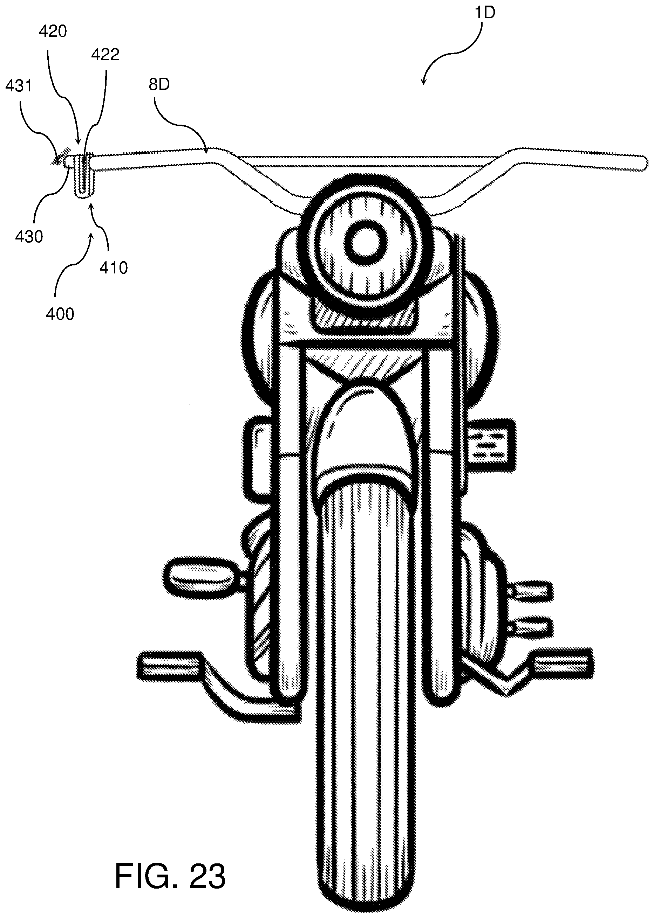

According to an embodiment, the vehicle 1C comprises a foldable cover identical to the foldable cover 150 (Fig. 5) which is preferably housed under the saddle 3C when it is folded. With reference to Fig. 23, this figure partially shows a saddle-type vehicle which has been globally indicated with the reference numeral 1D. In Fig. 23, particular emphasis is given to the handlebar 8D of the vehicle 1D and to an anti-theft device for a helmet according to a fourth embodiment which is preferably integral to the handlebar 8D. The vehicle 1D is a motorcycle having features similar to those of vehicle 1A with the exception of comprising a different anti-theft device 400, therefore the vehicle 1D will not be described herein in greater detail and in relation to this vehicle the same considerations set forth above with reference to vehicle 1A apply. The helmet (not shown in Fig. 23) suitable for being secured to the vehicle 1D by means of the anti-theft device 400 may be for example a helmet identical to any of the helmets 10A or 10C described above. In particular, the helmet is shaped so as to cooperate with the anti-theft device 400 through a through hole (female anchoring portion) of the helmet shell, so as to allow the helmet to be secured to the vehicle 1D through an anchoring device 422 of the anti-theft device 400. The anti-theft device 400 comprises a housing 410 integral with a part 2C of the vehicle 1D, specifically with the handlebar 8D, and an anchoring mechanism 420 adapted to be at least partially received within the housing 410. The anchoring mechanism 420 comprises said anchoring member 422 including a male anchoring portion configured to engage the above female anchoring portion of the helmet. The anchoring mechanism 420 further comprises a lock member 430 associated with the anchoring member 422. Preferably, the lock member 430 comprises a lock cylinder 430 operable with a removable key 431. The anchoring mechanism 420 is adapted to assume an anchoring configuration and a release configuration. In the anchoring configuration, the male anchoring portion passes through the aforementioned through hole of the helmet shell, engaging the female anchoring portion of the helmet to hold the helmet. In the release configuration, the female anchoring portion is disengaged from the male anchoring portion to separate the helmet from the vehicle 1D. According to an embodiment, the male anchoring portion can selectively assume an anchoring position and a releasing position associated with the anchoring configuration and the releasing configuration of the anchoring mechanism 420, respectively. According to an embodiment, the movement of the male anchoring portion between the aforementioned anchoring and release positions is controlled by the lock member 430. According to an embodiment, the anchoring member 422' is slidably coupled to the housing 410 to slide along a sliding axis. According to an embodiment, the anti-theft device 400 is a device having a structure similar to that of a common lock for a motorcycle in which the anchoring element 422 consists of a sliding anchoring pin 422 operable by means of the lock member 430 and said housing 410 has a "U" shape.

On the basis of what has been described above, it is therefore possible to understand that a saddle-type vehicle according to the present description is able to achieve the aforementioned objects.

The principle of the invention being understood, the manufacturing details and the embodiments may widely vary compared to what described and illustrated by way of a nonlimiting example only, without departing from the scope of the invention as defined in the accompanying claims.

## Claims

1. Saddle-type vehicle (1A;1B;1C) comprising an anti-theft device (100; 200; 300) for a helmet (10A; 10B; 10C), the anti-theft device (100; 200; 300) comprising:
- a housing (110; 210; 310); and
- an anchoring mechanism (120; 220; 320) adapted to be at least partially received within the housing (110; 210; 310);
the anchoring mechanism (120;220;320) comprising:
- at least one anchoring member (122',122";222;322) including a male anchoring portion (121',121";221;321) configured to engage a female anchoring portion (11A', 11A";11B;11C) of the helmet (10A; 10B; 10C); and
- a lock member (130; 230; 330) associated to the at least one anchoring member (122',122"; 222;322);
the anchoring mechanism (120; 220; 320) being adapted to assume:
an anchoring configuration, in which the male anchoring portion (121', 121"; 221; 321) engages the female anchoring portion (11A',11A";11B;11C) of the helmet (10A; 10B; 10C) to hold the helmet (10A; 10B; 10C); and
a release configuration, in which the female anchoring portion (11A',11A";11B;11C) is disengaged from the male anchoring portion (121', 121"; 221; 321) to separate the helmet (10A; 10B; 10C) from the vehicle (1A;1B;1C),
wherein the male anchoring portion (121',121";221) can selectively assume an anchoring position and a releasing position associated respectively to the anchoring configuration and the releasing configuration of the anchoring mechanism (120;220), wherein the movement of the male anchoring portion (121',121"; 221) between said anchoring and releasing positions is controlled via the lock member (130; 230), and
wherein the at least one anchoring member (122',122";222) is slidably coupled inside to said housing (110; 210) to slide along a sliding axis (X1; X2),
**characterised in that**
the at least one anchoring member (122',122") comprises a first and second portion (121', 121") opposite to each other and arranged so that at least one of them is configured to slide with respect to the other along said sliding axis (X1) to engage a first and/or a second female anchoring portion (11A',11A") of the helmet (10A; 10B; 10C).

2. Saddle-type vehicle (1A) according to claim 1, wherein the first and second portion (121',121") are pin shaped so to pass through openings (12A',12A") of the first and/or of the second female anchoring portion (11A',11A").

3. Saddle-type vehicle (1B) according to claim 1, wherein the a least one anchoring member (222) is rotatable and comprises one anchoring member (222), wherein said male anchoring portion (221) is configured to be complementary to said female anchoring portion (11B), wherein said male anchoring portion (221) is shaped so to be able to engage said female anchoring portion (11B) if a rotation in a specific angular position of the male anchoring portion (221) occurs.

4. Saddle-type vehicle (1C) according to claim 1, wherein the housing (310) comprises a housing hole (311) adapted to house the anchoring mechanism (320), wherein the anchoring mechanism (320) can be completely extracted from the housing hole (311), wherein the anchoring mechanism (320) comprises locking elements (323,340) and the housing (310) comprises conjugated locking elements (313',313",314) configured to engage the locking elements (323,340) of the anchoring mechanism (320), wherein in the anchoring configuration the locking elements (323,340) and the conjugated locking elements (313',313",314) are arranged so to block the anchoring mechanism (320) into the housing (310) preventing its extraction, wherein in the release configuration the locking elements (323,340) and the conjugated locking elements (313',313",314) are arranged so to permit the extraction of the anchoring mechanism (320) from the housing (310).

5. Saddle-type vehicle (1C) according to claim 4, wherein the locking elements (323,340) of the anchoring mechanism (320) comprise a first locking element (340) controlled via the lock member (330) and a second locking element (323) associated to the anchoring member (322), wherein the conjugated locking elements (313',313",314) comprise a first conjugated locking element (313') and a second conjugated locking element (314), wherein in the anchoring configuration the first locking element (340) engages the first conjugated locking element (313') to lock the sliding of the anchoring mechanism (320) along a longitudinal axis (X3) of the housing hole (311) and the second locking element (323) engages the second conjugated locking element (314) to prevent a rotation of the anchoring member (322) about the longitudinal axis (X3), wherein in the release configuration the first locking element (340) is disengaged from the first conjugated locking element (313') so to permit the sliding of the anchoring mechanism (320) along the longitudinal axis (X3).

6. Saddle-type vehicle (1C) according to claim 5, wherein the anchoring mechanism (320) is adapted to further assume a transport configuration and an further release configuration, in which configurations the anchoring mechanism (320) is almost entirely fitted into the housing (310), wherein the conjugated locking elements (313',313",314) comprise a further first conjugated locking element (313") which is spaced from the first conjugated locking element (313') along said longitudinal axis (X3), wherein in the transport configuration the first locking element (340) engages the further first conjugated locking element (313") to lock the sliding of the anchoring mechanism (320) along the longitudinal axis (X3), wherein in the further release configuration the first locking element (340) is disengaged from the further first conjugated locking element (313") so to permit the sliding of the anchoring mechanism (320) along the longitudinal axis (X3).

7. Saddle-type vehicle (1C) according to any claims 4 to 6, wherein the anchoring mechanism (320) is configured to pass through an opening (12C) of the female anchoring portion (11C), wherein the male anchoring portion (321) comprises a anchoring shoulder (321) which is configured to abut against a corresponding abutment portion (13C) of the female anchoring portion (11C) when the anchoring mechanism (320) assumes the anchoring configuration.

8. Saddle-type vehicle (1C) according to any claims 5 to 7, wherein said second locking element (323) and said second conjugated locking element (314) are shaped so to guide the insertion of the anchoring mechanism (320) inside the housing hole (311).

9. Saddle-type vehicle (1A;1B;1C) according to any of the preceding claims, wherein the housing (110; 210; 310) and the anchoring mechanism (120; 220; 320) are arranged on the vehicle (1A;1B;1C), preferably under the saddle (3A;3B;3C) of said vehicle (1A;1B;1C), more preferably on the handlebar (8A;8B) .

10. Saddle-type vehicle (1A;1B;1C) according to any of the preceding claims, wherein the vehicle comprises a foldable cover (150) which is adapted to cover the saddle (3A;3B;3C) and the helmet (10A;10B;10C), when the helmet (10A;10B;10C) is constrained to the anti-teft device (100; 200; 300).

11. Helmet (10A;10B;10C) for a head of a driver, comprising a shell (17A;17B;17C) and at least one female anchoring portion (11A',11A";11B;11C) provided on the shell (17A;17B;17C) which is shaped so to engage at least one male anchoring portion (121', 121"; 221; 321) of an anchoring mechanism (120; 220; 320) of a vehicle (1A;1B;1C), **characterised by** the anchoring mechanism (120; 220; 320) being as defined in one or more of the preceding claims.

12. Helmet (10A;10B) according to claim 11, wherein said at least one female anchoring portion (11A',11A";11B) is arranged on a first and/or second side portions (15A',15A"; 15B',15B") of the shell (17A;17B), preferably is arranged in a portion of the shell configured to protect a mandible cranium area of said head.

13. Kit (1A,10A; 1B,10B;1C,10C) comprising a saddle-type vehicle (1A;1B;1C) as defined in any one of claims 1 to 10 and a helmet (10A; 10B; 10C) as defined in any one of claims 11-12.

## Patentansprüche

1. Grätschsitzfahrzeug (1A; 1B; 1C), das eine Diebstahlsicherung (100; 200; 300) für einen Helm (10A; 10B; 10C) umfasst, wobei die Diebstahlsicherung (100; 200; 300) Folgendes umfasst:
- ein Gehäuse (110; 210; 310); und
- einen Verankerungsmechanismus (120; 220; 320), der dazu angepasst ist, mindestens teilweise in dem Gehäuse (110; 210; 310) aufgenommen zu sein;
wobei der Verankerungsmechanismus (120; 220; 320) Folgendes umfasst:
- mindestens ein Verankerungselement (122', 122"; 222; 322), das einen Verankerungssteckerabschnitt (121', 121"; 221; 321) beinhaltet, der zum Eingreifen in einen Verankerungsbuchsenabschnitt (11A', 11A"; 11B; 11C) des Helms (10A; 10B; 10C) konfiguriert ist; und
- ein Schlosselement (130; 230; 330), das mit dem mindestens einen Verankerungselement (122', 122"; 222; 322) assoziiert ist;
wobei der Verankerungsmechanismus (120; 220; 320) dazu angepasst ist, Folgendes einzunehmen:
eine Verankerungskonfiguration, in der der Verankerungssteckerabschnitt (121', 121"; 221; 321) in den Verankerungsbuchsenabschnitt (11A', 11A"; 11B; 11C) des Helms (10A; 10B; 10C) eingreift, um den Helm (10A; 10B; 10C) zu halten; und
eine Freigabekonfiguration, in der der Verankerungsbuchsenabschnitt (11A', 11A"; 11B; 11C) aus dem Verankerungssteckerabschnitt (121', 121"; 221; 321) ausgerückt ist, um den Helm (10A; 10B; 10C) von dem Fahrzeug (1A;1B;1C) zu trennen,
wobei der Verankerungssteckerabschnitt (121', 121"; 221) selektiv eine Verankerungsposition und eine Freigabeposition einnehmen kann, die jeweils mit der Verankerungskonfiguration und der Freigabekonfiguration des Verankerungsmechanismus (120; 220) assoziiert sind, wobei die Bewegung des Verankerungssteckerabschnitts (121', 121"; 221) zwischen der Verankerungs- und der Freigabeposition über das Schlosselement (130; 230) gesteuert wird, und
wobei das mindestens eine Verankerungselement (122', 122"; 222) verschiebbar in dem Gehäuse (110; 210) gekoppelt ist, um entlang einer Gleitachse (X1; X2) zu gleiten,
**dadurch gekennzeichnet, dass**
das mindestens eine Verankerungselement (122', 122") einen ersten und einen zweiten Abschnitt (121', 121") umfasst, die einander entgegengesetzt und derart eingerichtet sind, dass mindestens einer von ihnen zum Gleiten in Bezug auf den anderen entlang der Gleitachse (X1) konfiguriert ist, um in einen ersten und/oder einen zweiten Verankerungsbuchsenabschnitt (11A', 11A") des Helms (10A; 10B; 10C) einzugreifen.

2. Grätschsitzfahrzeug (1A) nach Anspruch 1, wobei der erste und der zweite Abschnitt (121', 121") stiftförmig sind, um durch Öffnungen (12A', 12A") des ersten und/oder des zweiten Verankerungsbuchsenabschnitts (11A', 11A") durchzugehen.

3. Grätschsitzfahrzeug (1B) nach Anspruch 1, wobei das mindestens eine Verankerungselement (222) drehbar ist und ein Verankerungselement (222) umfasst, wobei der Verankerungssteckerabschnitt (221) konfiguriert ist, um zu dem Verankerungsbuchsenabschnitt (11B) komplementär zu sein, wobei der Verankerungssteckerabschnitt (221) derart geformt ist, dass er in der Lage ist, in den Verankerungsbuchsenabschnitt (11B) einzugreifen, falls eine Drehung in einer spezifischen Winkelposition des Verankerungssteckerabschnitts (221) erfolgt.

4. Grätschsitzfahrzeug (1C) nach Anspruch 1, wobei das Gehäuse (310) ein Gehäuseloch (311) umfasst, das dazu angepasst ist, den Verankerungsmechanismus (320) aufzunehmen, wobei der Verankerungsmechanismus (320) vollständig aus dem Gehäuseloch (311) herausgezogen werden kann, wobei der Verankerungsmechanismus (320) Verriegelungselemente (323, 340) umfasst und das Gehäuse (310) konjugierte Verriegelungselemente (313', 313", 314) umfasst, die zum Eingreifen in die Verriegelungselemente (323, 340) des Verankerungsmechanismus (320) konfiguriert sind, wobei die Verriegelungselemente (323, 340) und die konjugierten Verriegelungselemente (313', 313", 314) in der Verankerungskonfiguration derart eingerichtet sind, dass sie den Verankerungsmechanismus (320) in dem Gehäuse (310) blockieren und dessen Herausziehen verhindern, wobei die Verriegelungselemente (323, 340) und die konjugierten Verriegelungselemente (313', 313", 314) in der Freigabekonfiguration derart eingerichtet sind, dass sie das Herausziehen des Verankerungsmechanismus (320) aus dem Gehäuse (310) erlauben.

5. Grätschsitzfahrzeug (1C) nach Anspruch 4, wobei die Verriegelungselemente (323, 340) des Verankerungsmechanismus (320) ein erstes Verriegelungselement (340), das über das Schlosselement (330) gesteuert ist, und ein zweites Verriegelungselement (323), das mit dem Verankerungselement (322) assoziiert ist, umfassen, wobei die konjugierten Verriegelungselemente (313', 313", 314) ein erstes konjugiertes Verriegelungselement (313') und ein zweites konjugiertes Verriegelungselement (314) umfassen, wobei das erste Verriegelungselement (340) in der Verankerungskonfiguration in das erste konjugierte Verriegelungselement (313') eingreift, um das Gleiten des Verankerungsmechanismus (320) entlang einer Längsachse (X3) des Gehäuselochs (311) zu sperren, und das zweite Verriegelungselement (323) in das zweite konjugierte Verriegelungselement (314) eingreift, um eine Drehung des Verankerungselements (322) um die Längsachse (X3) zu verhindern, wobei das erste Verriegelungselement (340) in der Freigabekonfiguration aus dem ersten konjugierten Verriegelungselement (313') ausgerückt ist, um derart das Gleiten des Verriegelungsmechanismus (320) entlang der Längsachse (X3) zu erlauben.

6. Grätschsitzfahrzeug (1C) nach Anspruch 5, wobei der Verankerungsmechanismus (320) dazu angepasst ist, ferner eine Transportkonfiguration und eine weitere Freigabekonfiguration einzunehmen, wobei der Verankerungsmechanismus (320) in diesen Konfigurationen fast vollständig in das Gehäuse (310) eingepasst ist, wobei die konjugierten Verriegelungselemente (313', 313", 314) ein weiteres erstes konjugiertes Verriegelungselement (313") umfassen, das von dem ersten konjugierten Verriegelungselement (313') entlang der Längsachse (X3) beabstandet ist, wobei das erste Verriegelungselement (340) in der Transportkonfiguration in das weitere erste konjugierte Verriegelungselement (313") eingreift, um das Gleiten des Verankerungsmechanismus (320) entlang der Längsachse (X3) zu sperren, wobei das erste Verriegelungselement (340) in der weiteren Freigabekonfiguration von dem weiteren ersten konjugierten Verriegelungselement (313") gelöst ist, um derart das Gleiten des Verankerungsmechanismus (320) entlang der Längsachse (X3) zu erlauben.

7. Grätschsitzfahrzeug (1C) nach einem der Ansprüche 4 bis 6, wobei der Verankerungsmechanismus (320) konfiguriert ist, um durch eine Öffnung (12C) des Verankerungsbuchsenabschnitts (11C) durchzugehen, wobei der Verankerungssteckerabschnitt (321) eine Verankerungsschulter (321) umfasst, die zum Anschlagen gegen einen entsprechenden Anschlagabschnitt (13C) des Verankerungsbuchsenabschnitts (11C) konfiguriert ist, wenn der Verankerungsmechanismus (320) die Verankerungskonfiguration einnimmt.

8. Grätschsitzfahrzeug (1C) nach einem der Ansprüche 5 bis 7, wobei das zweite Verriegelungselement (323) und das zweite konjugierte Verriegelungselement (314) derart geformt sind, dass sie das Einsetzen des Verankerungsmechanismus (320) in das Gehäuseloch (311) führen.

9. Grätschsitzfahrzeug (1A; 1B; 1C) nach einem der vorstehenden Ansprüche, wobei das Gehäuse (110; 210; 310) und der Verankerungsmechanismus (120; 220; 320) an dem Fahrzeug (1A; 1B; 1C), bevorzugt unter dem Sattel (3A; 3B; 3C) des Fahrzeugs (1A; 1B; 1C), bevorzugter an der Lenkstange (8A; 8B) eingerichtet sind.

10. Grätschsitzfahrzeug (1A; 1B; 1C) nach einem der vorstehenden Ansprüche, wobei das Fahrzeug eine faltbare Abdeckung (150) umfasst, die angepasst ist, um den Sattel (3A; 3B; 3C) und den Helm (10A; 10B; 10C) abzudecken ist, wenn der Helm (10A; 10B; 10C) an der Diebstahlsicherung (100; 200; 300) festgehalten wird.

11. Helm (10A; 10B; 10C) für einen Kopf eines Fahrers, der eine Schale (17A; 17B; 17C) und mindestens einen Verankerungsbuchsenabschnitt (11A', 11A"; 11B; 11C), der an der Schale (17A; 17B; 17C) bereitgestellt ist, umfasst, der derart geformt ist, dass er in mindestens einen Verankerungssteckerabschnitt (121', 121"; 221; 321) eines Verankerungsmechanismus (120; 220; 320) eines Fahrzeugs (1A; 1B; 1C) eingreift, **dadurch gekennzeichnet, dass** der Verankerungsmechanismus (120; 220; 320) wie in einem oder mehreren der vorstehenden Ansprüche definiert ist.

12. Helm (10A; 10B) nach Anspruch 11, wobei der mindestens eine Verankerungsbuchsenabschnitt (11A', 11A"; 11B) an einem ersten und/oder zweiten Seitenabschnitt (15A', 15A"; 15B', 15B") der Schale (17A; 17B) eingerichtet ist, bevorzugt in einem Abschnitt der Schale, der zum Schützen eines Unterkieferschädelbereichs des Kopfes konfiguriert ist, eingerichtet ist.

13. Bausatz (1A, 10A; 1B, 10B; 1C, 10C), der ein Grätschsitzfahrzeug (1A; 1B; 1C), wie in einem der Ansprüche 1 bis 10 definiert, und einen Helm (10A; 10B; 10C), wie in einem der Ansprüche 11-12 definiert, umfasst.

## Revendications

1. Véhicule à selle (1A; 1B ; 1C) comprenant un dispositif antivol (100 ; 200 ; 300) pour casque (10A ; 10B ; 10C), le dispositif antivol (100 ; 200 ; 300) comprenant :
- un logement (110 ; 210 ; 310) ; et
- un mécanisme d'ancrage (120 ; 220 ; 320) adapté pour être au moins partiellement reçu au sein du logement (110 ; 210 ; 310) ;
le mécanisme d'ancrage (120 ; 220 ; 320) comprenant :
- au moins un élément d'ancrage (122', 122" ; 222 ; 322) comprenant une portion d'ancrage mâle (121', 121" ; 221 ; 321) conçue pour venir en prise avec une portion d'ancrage femelle (11A', 11A" ; 11B ; 11C) du casque (10A ; 10B ; 10C) ; et
- un élément de verrou (130 ; 230 ; 330) associé à l'au moins un élément d'ancrage (122', 122" ; 222 ; 322) ;
le mécanisme d'ancrage (120 ; 220 ; 320) étant adapté pour prendre :
une configuration d'ancrage, dans laquelle la portion d'ancrage mâle (121', 121" ; 221 ; 321) vient en prise avec la portion d'ancrage femelle (11A', 11A" ; 11B ; 11C) du casque (10A ; 10B ; 10C) pour maintenir le casque (10A ; 10B ; 10C) ; et
une configuration de libération, dans laquelle la portion d'ancrage femelle (11A', 11A" ; 11B ; 11C) est désolidarisée de la portion d'ancrage mâle (121', 121" ; 221 ; 321) pour séparer le casque (10A ; 10B ; 10C) du véhicule (1A ; 1B ; 1C),
dans lequel la portion d'ancrage mâle (121', 121" ; 221) peut prendre sélectivement une position d'ancrage et une position de libération associées respectivement à la configuration d'ancrage et à la configuration de libération du mécanisme d'ancrage (120 ; 220), dans lequel le déplacement de la portion d'ancrage mâle (121', 121" ; 221) entre lesdites positions d'ancrage et de libération est commandé via l'élément de verrou (130 ; 230), et
dans lequel l'au moins un élément d'ancrage (122', 122" ; 222) est accouplé de manière coulissante à l'intérieur dudit logement (110 ; 210) pour coulisser le long d'un axe de coulissement (X1 ; X2),
**caractérisé en ce que**
l'au moins un élément d'ancrage (122', 122") comprend une première et une seconde portion (121', 121") opposées l'une à l'autre et agencées de sorte qu'au moins l'une d'elles soit conçue pour coulisser par rapport à l'autre le long dudit axe de coulissement (X1) pour venir en prise avec une première et/ou une seconde portion d'ancrage femelle (11A', 11A") du casque (10A ; 10B ; 10C).

2. Véhicule à selle (1A) selon la revendication 1, dans lequel les première et seconde portions (121', 121") sont en forme de goupille pour passer à travers des ouvertures (12A', 12A") de la première et/ou de la seconde portion d'ancrage femelle (11A', 11A").

3. Véhicule à selle (1B) selon la revendication 1, dans lequel l'au moins un élément d'ancrage (222) est rotatif et comprend un élément d'ancrage (222), dans lequel ladite portion d'ancrage mâle (221) est conçue pour être complémentaire de ladite portion d'ancrage femelle (11B), dans lequel ladite portion d'ancrage mâle (221) est formée pour pouvoir venir en prise avec ladite portion d'ancrage femelle (11B) si une rotation dans une position angulaire spécifique de la portion d'ancrage mâle (221) se produit.

4. Véhicule à selle (1C) selon la revendication 1, dans lequel le logement (310) comprend un trou de logement (311) adapté pour loger le mécanisme d'ancrage (320), dans lequel le mécanisme d'ancrage (320) peut être complètement extrait du trou de logement (311), dans lequel le mécanisme d'ancrage (320) comprend des éléments de verrouillage (323, 340) et le logement (310) comprend des éléments de verrouillage conjugués (313', 313", 314) conçus pour venir en prise avec les éléments de verrouillage (323, 340) du mécanisme d'ancrage (320), dans lequel, dans la configuration d'ancrage, les éléments de verrouillage (323, 340) et les éléments de verrouillage conjugués (313', 313", 314) sont agencés de manière à bloquer le mécanisme d'ancrage (320) dans le logement (310), empêchant son extraction, dans lequel, dans la configuration de libération, les éléments de verrouillage (323, 340) et les éléments de verrouillage conjugués (313', 313", 314) sont agencés de manière à permettre l'extraction du mécanisme d'ancrage (320) à partir du logement (310).

5. Véhicule à selle (1C) selon la revendication 4, dans lequel les éléments de verrouillage (323, 340) du mécanisme d'ancrage (320) comprennent un premier élément de verrouillage (340) commandé via l'élément de verrou (330) et un second élément de verrouillage (323) associé à l'élément d'ancrage (322), dans lequel les éléments de verrouillage conjugués (313', 313", 314) comprennent un premier élément de verrouillage conjugué (313') et un second élément de verrouillage conjugué (314), dans lequel, dans la configuration d'ancrage, le premier élément de verrouillage (340) vient en prise avec le premier élément de verrouillage conjugué (313') pour verrouiller le coulissement du mécanisme d'ancrage (320) le long d'un axe longitudinal (X3) du trou de logement (311) et le second élément de verrouillage (323) vient en prise avec le second élément de verrouillage conjugué (314) pour empêcher une rotation de l'élément d'ancrage (322) autour de l'axe longitudinal (X3), dans lequel, dans la configuration de libération, le premier élément de verrouillage (340) est désolidarisé du premier élément de verrouillage conjugué (313') afin de permettre le coulissement du mécanisme d'ancrage (320) le long de l'axe longitudinal (X3).

6. Véhicule à selle (1C) selon la revendication 5, dans lequel le mécanisme d'ancrage (320) est adapté pour prendre en outre une configuration de transport et une autre configuration de libération, dans lesquelles le mécanisme d'ancrage (320) est presque entièrement ajusté dans le logement (310), dans lequel les éléments de verrouillage conjugués (313', 313", 314) comprennent un autre premier élément de verrouillage conjugué (313") qui est espacé du premier élément de verrouillage conjugué (313') le long dudit axe longitudinal (X3), dans lequel, dans la configuration de transport, le premier élément de verrouillage (340) vient en prise avec l'autre premier élément de verrouillage conjugué (313") pour verrouiller le coulissement du mécanisme d'ancrage (320) le long de l'axe longitudinal (X3), dans lequel, dans l'autre configuration de libération, le premier élément de verrouillage (340) est désolidarisé de l'autre premier élément de verrouillage conjugué (313") afin de permettre le coulissement du mécanisme d'ancrage (320) le long de l'axe longitudinal (X3).

7. Véhicule à selle (1C) selon l'une quelconque des revendications 4 à 6, dans lequel le mécanisme d'ancrage (320) est conçu pour passer à travers une ouverture (12C) de la portion d'ancrage femelle (11C), dans lequel la portion d'ancrage mâle (321) comprend un épaulement d'ancrage (321) qui est conçu pour buter contre une portion de butée correspondante (13C) de la portion d'ancrage femelle (11C) lorsque le mécanisme d'ancrage (320) prend la configuration d'ancrage.

8. Véhicule à selle (1C) selon l'une quelconque des revendications 5 à 7, dans lequel ledit second élément de verrouillage (323) et ledit second élément de verrouillage conjugué (314) sont formés de manière à guider l'insertion du mécanisme d'ancrage (320) à l'intérieur du trou de logement (311).

9. Véhicule à selle (1A ; 1B ; 1C) selon l'une quelconque des revendications précédentes, dans lequel le logement (110 ; 210 ; 310) et le mécanisme d'ancrage (120 ; 220 ; 320) sont agencés sur le véhicule (1A ; 1B ; 1C), de préférence sous la selle (3A ; 3B ; 3C) dudit véhicule (1A ; 1B ; 1C), plus préférablement sur le guidon (8A ; 8B).

10. Véhicule à selle (1A ; 1B ; 1C) selon l'une quelconque des revendications précédentes, dans lequel le véhicule comprend une housse pliable (150) qui est adaptée pour recouvrir la selle (3A ; 3B ; 3C) et le casque (10A ; 10B ; 10C), lorsque le casque (10A ; 10B ; 10C) est contraint au dispositif antivol (100 ; 200 ; 300).

11. Casque (10A ; 10B ; 10C) pour la tête d'un pilote, comprenant une coque (17A ; 17B ; 17C) et au moins une portion d'ancrage femelle (11A', 11A" ; 11B ; 11C) prévue sur la coque (17A ; 17B ; 17C) qui est formée de manière à venir en prise avec au moins une portion d'ancrage mâle (121', 121" ; 221 ; 321) d'un mécanisme d'ancrage (120 ; 220 ; 320) d'un véhicule (1A ; 1B ; 1C), **caractérisé en ce que** le mécanisme d'ancrage (120 ; 220 ; 320) est tel que défini dans une ou plusieurs des revendications précédentes.

12. Casque (10A ; 10B) selon la revendication 11, dans lequel ladite au moins une portion d'ancrage femelle (11A', 11A" ; 11B) est agencée sur une première et/ou une seconde portion latérale (15A', 15A" ; 15B', 15B") de la coque (17A ; 17B), et est de préférence agencée dans une portion de la coque conçue pour protéger une zone mandibulo-crânienne de ladite tête.

13. Kit (1A, 10A ; 1B, 10B ; 1C, 10C) comprenant un véhicule à selle (1A ; 1B ; 1C) tel que défini dans l'une quelconque des revendications 1 à 10 et un casque (10A ; 10B ; 10C) tel que défini dans l'une quelconque des revendications 11 à 12.
